# EUROPÄISCHE PATENTSCHRIFT

(11) **EP 1 826 076 B1**
(45) Veröffentlichungstag und Bekanntmachung des Hinweises auf die Patenterteilung: **27.04.2011**
(21) Anmeldenummer: 07002243.9
(22) Anmeldetag: 02.02.2007
(51) Int. Cl.: B60R 25/02

(54) **Sperrvorrichtung für ein bewegliches Element**
Locking device for a moveable element
Dispositif de verrouillage pour un élément mobile

(30) Priorität: 24.02.2006 DE 102006008624
(43) Veröffentlichungstag der Anmeldung: 29.08.2007
(73) Patentinhaber: Volkswagen Aktiengesellschaft, 38436 Wolfsburg (DE); Marquardt GmbH, 78604 Rietheim-Weilheim (DE)
(72) Erfinder: Frohne, Hans-Joachim, 38165 Lehre (DE); Borngräber, Ralf, 38165 Lehre (DE); Meßmer, Dennis, 78647 Trossingen (DE); Schwarz, Thomas, 78628 Wurmlingen (DE)

(56) Entgegenhaltungen:
- DE-A1- 10 353 195
- DE-A1- 19 939 733
- DE-C1- 19 801 752

## Beschreibung

Die Erfindung betrifft eine Sperrvorrichtung für ein bewegliches Element, insbesondere eine Sperrvorrichtung für einen ID-Geber-Aufnahmeschlitten eines vorzugsweise elektronischen Zündschlosses als Zündschlüsselabzugssperre und ein elektronisches Zündschloss mit einer solchen Sperrvorrichtung.

Im Stand der Technik sind Zündschlösser bekannt, in die ein ID-Geber eingeführt wird. Weist der ID-Geber eine erste Zugehörigkeit zu einem Aufnahmeelement des Zündschlosses auf, so kann das Aufnahmeelement mit dem ID-Geber aus einer Grundstellung in eine ausgelenkte Stellung bewegt werden. Die erste Zugehörigkeit ist meist als mechanische Zugehörigkeit ausgebildet. Dieses bedeutet, dass der ID-Geber mechanisch zu dem Aufnahmeelement passt. In der ausgelenkten Stellung ist der ID-Geber in dem Aufnahmeelement verriegelt. Ferner kann der ID-Geber beziehungsweise das Aufnahmeelement, wenn es aus der Grundstellung ausgelenkt ist, in unterschiedliche Schaltstellungen bewegt werden, an denen Schaltkontakte geschlossen oder geöffnet werden. Die Schaltstellungen werden entsprechend einer Klemme oder eines Kontakts bezeichnet, der bei einer Bewegung in der jeweiligen Schaltstellung geschlossen wird oder ist. Dass das Öffnen oder Schließen tatsächlich ausgeführt wird, kann noch von einer zweiten Zugehörigkeit des ID-Gebers zu dem Zündschloss oder dem Aufnahmeelement abhängig gemacht werden. Hierzu wird in der Regel eine codierte Kennung aus dem ID-Geber ausgelesen und elektronisch verarbeitet. Diese Vorgänge sind dem Fachmann bekannt und werden hier daher nicht näher erläutert.

Bei einem Kraftfahrzeug umfassen die Schaltstellungen die Stellungen S-Kontakt, Klemme 15, Klemme 50 und die Stellung Klemme 15 Fahrt. Zunächst wird der S-Kontakt geschlossen, so dass elektrische Verbraucher im Fahrzeug, beispielsweise ein Radio, mit elektrischer Energie versorgt werden. Ist die Klemme 15 aktiviert, so wird die Zündung des Kraftfahrzeugs aktiviert. Der Gesetzgeber verlangt, dass ab diesem Zeitpunkt eine Entnahme des ID-Gebers aus dem Zündschloss gesperrt ist. Daher wird eine Sperrvorrichtung spätestens aktiviert, wenn das Aufnahmeelement mit dem ID-Geber aus der Stellung S-Kontakt in die Stellung Klemme 15 bewegt wird.

Die Sperrvorrichtung umfasst einen Sperrriegel, der zwischen einer nicht sperrenden und einer sperrenden Stellung bewegbar ist. Die Bewegungsrichtung zwischen der sperrenden und der nicht sperrenden Stellung verläuft vorzugsweise senkrecht zu der Bewegungsrichtung, in der das Aufnahmeelement von der ausgelenkten Stellung in die Grundstellung bewegt wird. Der Sperrriegel kann mittels eines Vorspannelements, beispielsvireise einer Feder, entweder in die sperrende Stellung oder die nicht sperrende Stellung vorgespannt sein. Der Sperrvorrichtung kann auch so ausgebildet sein, dass der Sperrriegel in der sperrenden und der nicht sperrenden Stellung verharrt, sofern er nicht von einem Aktor, beispielsweise einem Magneten bewegt wird.

Der Sperrriegel weist eine Wechselwirkungsfläche auf, die in der sperrenden Stellung des Sperrriegels mit dem Aufnahmeelement, insbesondere einem Sperrnocken des Aufnahmeelements, wechselwirkt, so dass eine Bewegung des Aufnahmeelements von der ausgelenkten Stellung in die Grundstellung gesperrt ist. Hierzu weist die Wechselwirkungsfläche des Sperrriegels ein Vorsprung auf, der beim Sperren mit dem Sperrnocken des Aufnahmeelements eine mechanisch schlüssige Verbindung ausbildet. Dies bedeutet, dass der Sperrnocken beim Sperren den Vorsprung umgreift. Eine Bewegung des Sperrriegels in die nicht sperrende Stellung ist nicht möglich.

In der Regel sind Zündschlösser dieser Art so ausgebildet, dass das Aufnahmeelement mittels einer Feder am Ende eines Bedienvorgangs in die Stellung S-Kontakt bewegt wird. Um das Aufnahmeelement anschließend in die Grundstellung zu bewegen, in der der ID-Geber wieder aus dem Aufnahmeelement entnehmbar ist, muss eine Kraft in Richtung auf die Grundstellung des Aufnahmeelements auf den ID-Geber ausgeübt werden. Die Sperrvorrichtung ist so ausgestaltet, dass der Sperrriegel aus der sperrenden Stellung bereits in die nicht sperrende Stellung mittels eines Aktors bewegt wird, sobald die Klemme 15 abfällt und weiter gesetzliche Vorgaben (beispielsweise Gangwahlhebel in Position "P") erfüllt sind. Im normalen Gebrauch tritt die Situation, dass der Sperrnocken an dem Sperrriegel eine mechanisch schlüssige Verbindung ausbildet, somit nicht auf. Das heißt, der Sperrriegel befindet sich bereits in der nicht sperrenden Stellung, bevor die Kraft zur Zurückführung des Aufnahmeelements in die Grundstellung auf den ID-Geber und somit auf das Aufnahmeelement ausgeübt wird.

Zerrt ein Nutzer jedoch an dem ID-Geber, so kann das Aufnahmeelement sich so schnell bewegen, dass sich eine mechanisch schlüssige Verbindung zwischen dem Sperrnocken und dem Sperrriegel ausbildet, bevor der Sperrriegel in die nicht sperrende Stellung bewegt ist. Die Schaltzeit hierfür beträgt etwa 130-150 ms. Solange an dem ID-Geber kontinuierlich in Richtung auf die Grundstellung gezogen wird, ist eine Entsperrung unmöglich. Die Sperrvorrichtung sendet an den Aktor, der den Sperrriegel bewegt, in der Regel nur eine begrenzte Anzahl von Steuerpulsen, um eine Entriegelung zu bewirken. Wird während dieser Zeit kontinuierlich eine Kraft in Richtung der Grundstellung des Aufnahmeelements auf den ID-Geber und somit auf das Aufnahmeelement selbst ausgeübt, so misslingt die Entsperrung und der ID-Geber kann dem Zündschloss nicht entnommen werden. Das Zündschlosssystem kann in einem solchen Zustand ferner so verspannt werden, dass eine Entnahme des Schlüssels ohne eine professionelle Hilfe durch eine Werkstatt gar nicht mehr möglich ist.

Ein bekanntes System der Stand der Technik kann im Dokument DE-A-10353195 gefunden werden. Das Dokument DE-A-19801752 offenbart eine Sperrvorrichtung gemäß dem Oberbegriff des Anspruchs 1.

Auch wenn dieser Zustand nur bei nicht sachgerechtem Gebrauch eintritt, besteht ein Bedarf eine verbesserte Sperrvorrichtung und ein verbessertes, vorzugsweise elektronisches Zündschloss zu schaffen, die die oben erwähnten Probleme nicht aufweisen.

Der Erfindung liegt somit die technische Aufgabe zugrunde, eine Sperrvorrichtung für ein bewegliches Element, insbesondere ein Aufnahmeelement eines vorzugsweise elektronischen Zündschlosses, und ein Zündschloss mit einer derartigen Sperrvorrichtung zu schaffen, die ein Entsperren auch bei einer Krafteinwirkung auf einen Sperrriegel ermöglichen, wenn die Krafteinwirkung in einer Richtung (Sperrrichtung) wirkt, in der eine Bewegung des beweglichen Elements gesperrt wird.

Die Aufgabe wird erfindungsgemäß durch eine Sperrvorrichtung mit den Merkmalen des Patentanspruchs 1 und ein Zündschloss mit den Merkmalen des Patentanspruchs 6 gelöst. Vorteilhafte Ausführungsformen sind in den Uriterarisprüchen angegeben.

Bei einer Sperrvorrichtung für ein bewegliches Element, das zwischen einer Grundstellung und einer ausgelenkten Stellung bewegbar ist, die einen Sperrriegel umfasst, der zwischen einer nicht sperrenden und einer sperrenden Stellung bewegbar ist und in der sperrenden Stellung des Sperrriegels mit einem Sperrnocken des beweglichen Elements wechselwirkt, so dass eine Bewegung des beweglichen Elements von der ausgelenkten Stellung in die Grundstellung gesperrt ist, ist erfindungsgemäß vorgesehen, dass der Sperrriegel eine Wechselwirkungsfläche umfasst, die in der sperrenden Stellung mit dem Sperrnocken wechselwirkt und so ausgebildet ist, dass eine eine Bewegung in die Grundstellung bewirkende Kraft auf das bewegliche Element beim Sperren unter Vernachlässigung einer Oberflächenreibung zwischen der Wechselwirkungsfläche und dem Sperrnocken eine Kraft auf den Sperrriegel bewirkt, die eine Bewegung in die nicht sperrende Stellung des Sperrriegels unterstützt die Wechselwirkungsfläche so ausgebildet ist, dass allein aufgrund der Oberflächenreibung mit dem Sperrnocken beim Sperren die eine Bewegung in die Grundstellung bewirkende Kraft auf das bewegliche Element keine resultierende Kraft auf den Sperrriegel bewirkt, die eine Bewegung des Sperrriegels aus der sperrenden Stellung in die nicht sperrende Stellung bewirkt. Hierdurch ist es selbst bei einer Berücksichtigung einer Oberflächenreibung möglich, eine Entsperrung unter Krafteinwirkung entlang der Sperrrichtung zu erreichen. Somit ist die erfindungsgemäße Sperrvorrichtung zuverlässig und sorgt dafür, dass der Sperrriegel in jedem Fall entsperrt werden kann. Bei einem erfindungsgemäßen Zündschloss mit einem ID-Geber-Aufnahmeelement, das vorzugsweise als Schlitten ausgebildet ist, das in der Grundstellung einen ID-Geber aufnehmen kann und bei einer Zugehörigkeit erster Art des ID-Gebers zu dem ID-Geber-Aufnahmeelement mit dem aufgenommenen ID-Geber in eine ausgelenkte Stellung bewegbar ist, wobei das ID-Geber-Aufnahmeelement den ID-Geber in der ausgelenkten Stellung nicht freigibt, ist eine erfindungsgemäße Sperrvorrichtung als ID-Geber-Abzugsperre vorgesehen, wobei das ID-Geber-Aufnahmeelement das bewegliche Element ist. Dieses Zündschloss weist den Vorteil auf, dass eine Verspannung des Aufnahmeelements, wie sie bei den Zündschlössern gemäß dem Stand der Technik auftrat, nicht mehr vorkommen kann. Eine Rückkehr des ID-Geber-Aufnahmeelements in die Grundstellung ist immer gewährleistet. Hierdurch ist auch immer eine Entnahme des ID-Gebers aus dem Zündschloss möglich, die bei einer Rückkehr des ID-Geber-Aufnahmeelements in die Grundstellung gewährleistet ist. Der Sperrnocken muss in dem hier verwendeten Sinne kein eigenständiges Bauteil des ID-Geber-Aufnahmeelements sein. Jeder beliebige Teil des ID-Geber-Aufnahmeelements, der mit der Wechselwirkungsoberfläche des Sperrriegels beim Sperren wechselwirkt wird als Sperrnocken in Sinne des hier Ausgeführten betrachtet.

Die Wechselwirkungsfläche wird so gestaltet, dass eine so genannte Selbsthemmung auftritt. Dies bedeutet, dass bei einer Krafteinwirkung entlang der Sperrrichtung auf das bewegliche Element aufgrund von Reibungskräften, die bei einer Wechselwirkung des Sperrnockens mit der Wechselwirkungsfläche auftreten, keine resultierende Kraft auf den Sperrriegel wirkt, die eine Bewegung in die nicht sperrende Stellung bewirkt. Die Reibungskräfte sind somit größer als die Kraft, die aufgrund der geometrischen Gestaltung der Wechselwirkungsfläche unter Vernachlässigung von Reibungseinflüssen beim Sperren von dem Sperrnocken auf den Sperrriegel "übertragen" wird. Hierdurch ist jederzeit ein sicheres Sperren gewährleistet.

Der Sperrriegel ist gemäß einer bevorzugten Ausführungsform ausgestaltet, eine lineare Hubbewegung zwischen der sperrenden Stellung und der nicht sperrenden Stellung auszuführen. Eine Hubbewegung ist hierbei eine Bewegung, die senkrecht oder nahezu senkrecht zu einer Ebene ausgeführt wird, in der das bewegliche Element bewegbar ist. Der Aktor zum Bewegen des Sperrriegels muss bei dieser Ausführungsform keine Kräfte aufbringen bzw. keinen Kräften standhalten, die den maximal beim Sperren einwirkenden Kräften entsprechen. Somit können Aktoren, die eine geringere Maximalkraft bereitstellen verwendet werden. Der Sperrriegel und dessen Führung können so ausgestaltet werden, dass diese die beim Sperren einwirkenden Kräfte vollständig oder zumindest größtenteils aufnehmen. Die Sperrvorrichtung gemäß dieser Ausführungsform kann, mechanisch besonders kompakt und zugleich stabil ausgeführt werden.

Bei einer Ausführungsform der Erfindung ist vorgesehen, dass der Sperrriegel einen Sperrbalken umfasst, wobei eine Seitenfläche des Sperrbalkens die Wechselwirkungsfläche umfasst, die eben ist und deren Flächennormale einen Winkel kleiner 90° bezüglich einer Bewegungsrichtung bildet, der der Sperrriegel zumindest anfänglich bei einer Bewegung aus der sperrenden Stellung in die nicht sperrende Stellung folgt. Führt der Sperrriegel beispielsweise eine Hubbewegung senkrecht zur Sperrrichtung aus, so umfasst der Sperrriegel in dieser Ausführungsform einen Sperrbalken, der vorzugsweise quaderförmig ausgebildet ist. Eine Seitenfläche umfasst oder ist in einer bevorzugten Weiterbildung die Wechselwirkungsoberfläche, die angefast ist. Die Seitenfläche oder der Teil der Seitenflache ist somit gegenüber der Hubbewegungsrichtung angeschrägt. Stellt die Bahnkurve, der der Sperrriegel bei einer Bewegung von der sperrenden in die nicht sperrende Stellung folgt, keine Gerade dar, so ist die anfängliche Bewegungsrichtung, d. h. die Bewegungsrichtung maßgeblich, die durch eine Tangente an die Bahnkurve in der sperrenden Stellung festgelegt ist.

Eine Selbsthemmung erhält man bei einer erfindungsgemäßen Sperrvorrichtung, wenn die Flächennormale der Wechselwirkungsfläche bezüglich der Bewegungsrichtung, der der Sperrriegel zumindest anfänglich bei einer Bewegung aus der sperrenden Stellung in die nicht sperrende Stellung folgt, einen Winkel von größer 84°, vorzugsweise einen Winkel von 85° bildet.

Eine erfindungsgemäße Sperrvorrichtung kann vorteilhafterweise in Zündschlössern von Kraftfahrzeugen eingesetzt werden. Eine bevorzugte Ausführungsform ist so ausgestaltet, dass das bewegliche Element ein ID-Geber-Aufnahmeelement ist, das in der Grundstellung einen ID-Geber aufnehmen kann und bei einer Zugehörigkeit erster Art des ID-Gebers zu dem ID-Geber-Aufnahmeelement mit dem aufgenommenen ID-Geber in die ausgelenkte Stellung bewegbar ist, wobei das ID-Geber-Aufnahmeelement den ID-Geber in der ausgelenkten Stellung nicht freigibt. Das ID-Geber-Aufnahmeelement ist vorzugsweise als Schlitten ausgebildet.

Bei einer bevorzugten Ausführungsform eines erfindungsgemäßen Zündschlosses ist vorgesehen, dass der Sperrnocken des ID-Geber-Aufnahmeelements eine ebene Nockenoberfläche aufweist, die beim Sperren plan an der Wechselwirkungsfläche des Sperrriegels anliegt. Eine Haftreibung zwischen der Nockenoberfläche und der Wechselwirkungsfläche des Sperrriegels ist bei einer solchen Ausführungsform maximal. Der Winkel zwischen der anfänglichen Bewegungsrichtung des Sperrriegels beim Entsperren und der Wechselwirkungsoberfläche kann so besonders niedrig gewählt werden Eine Wahrscheinlichkeit, dass ein Verkanten oder ein Verspannen des ID-Geber-Aufnahmeelements bei unsachgemäßem Gebrauch auftritt wird so weiter verringert.

Eine Ausführungsform eines erfindungsgemäßen Zündschlosses ist so ausgestaltet, dass das ID-Geber-Aufnahmeelement in der ausgelenkten Stellung in unterschiedliche Schaltpositionen bewegbar ist und bei Vorliegen einer Zugehörigkeit zweiter Art an den Schaltpositionen Schaltkontakte öffen- und/oder schließbar sind.

Um die Zugehörigkeit zweiter Art zu überprüfen, ist bei einer Ausführungsform eines erfindungsgemäßen Zündschlosses eine Erfassungseinheit zum Erfassen einer Kennung des ID-Gebers und eine elektronische Verarbeitungseinheit vorgesehen, mit der die Kennung zur Überprüfung der Zugehörigkeit zweiter Art auswertbar ist. Hierdurch erhält man ein elektronisches Zündschloss mit einer bevorzugten Sperrvorrichtung. Elektronische Kennungen sind in der Regel in Form von Codierungen in den ID-Geber integriert. Mehrere unterschiedliche Kennungen können hierbei eine Zugehörigkeit zweiter Art zu dem Zündschloss aufweisen. So können beispielsweise unterschiedliche Nutzer ID-Gebef mit unterschiedlichen Kennungen besitzen, die jedoch alle das Zündschloss bedienen können. Die unterschiedlichen Kennungen können beispielsweise verwendet werden, um bestimmte Funktionen des Fahrzeugs individuell abgestimmt auf die unterschiedlichen Nutzer anzubieten.

Die Erfindung wird nachfolgend anhand bevorzugter Ausführungsbeispiele unter Bezugnahme auf eine Zeichnung näher erläutert. Die Figuren zeigen:
- Fig. 1: eine untere Gehäuseschale eines elektronischen Zündschlosses;
- Fig. 2: eine andere untere Gehäuseschale eines elektronischen Zündschlosses und ein darin aufgenommenes als ID-Geber-Aufnahmeschlitten ausgebildetes ID-Geber-Aufnahmeelement nach dem Stand der Technik;
- Fig. 3: eine schematische Darstellung eines ID-Gebers;
- Fig. 4: einen Ausschnitt der Gehäuseschale und des ID-Geber-Aufnahmeschlittens nach Fig. 2 gemeinsam mit einem Sperrriegel nach dem Stand der Technik in einer sperrenden Stellung;
- Fig. 5: einen Sperrriegel nach dem Stand der Technik;
- Fig. 6: eine Ausführungsform eines bevorzugten Sperrriegels; und
- Fig. 7: eine schematische Darstellung der beim Sperren auftretenden Kräfte.

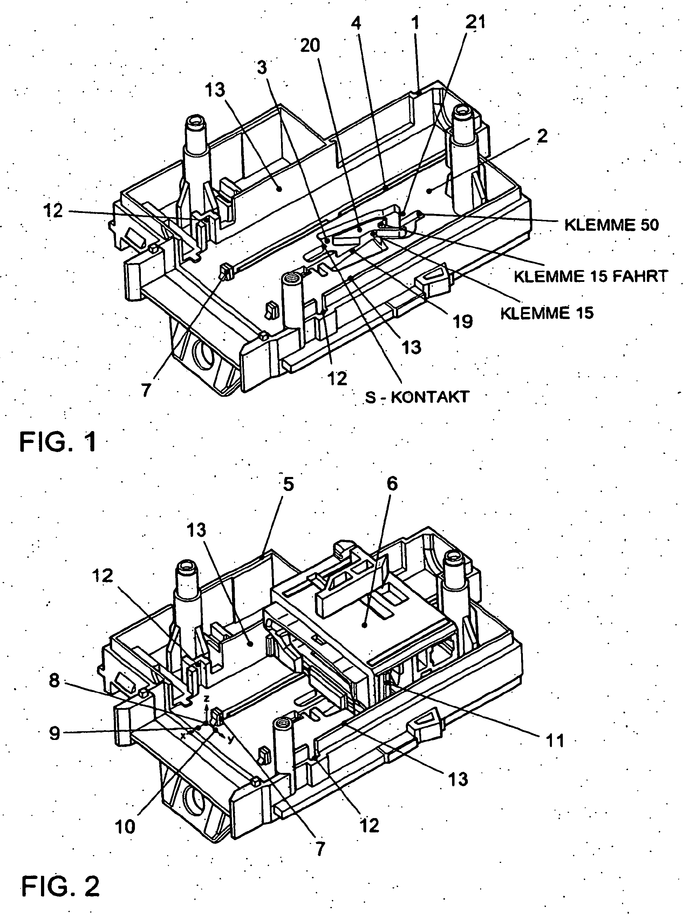

In Fig. 1 ist eine untere Gehäuseschale 1 eines elektronischen Zündschlosses dargestellt. In einem Boden 2 der Gehäuseschale 1 ist eine Führungskontur 3 als Vertiefung oder Durchbruch ausgebildet. In dem Boden 2 ist ferner eine Führungsnut 4 vorhanden. In der Gehäuseschale 1 kann ein ID-Geber-Aufnahmeelement aufgenommen werden.

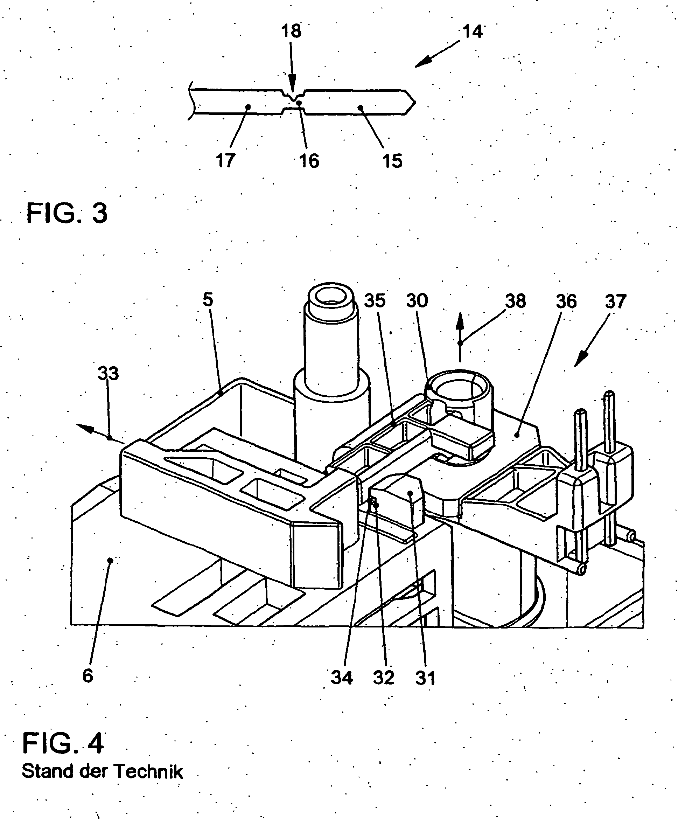

In Fig. 2 ist eine weitere Gehäuseschale 5 ähnlich zu der von Fig. 1 dargestellt. Gleiche technische Merkmale sind mit identischen Bezugszeichen versehen. In der weiteren Gehäuseschale 5 ist ein als ID-Geber-Aufnahmeschlitten 6 ausgebildetes ID-Geber-Aufnahmeelement aufgenommen, das mittels einer Führungsnut 4 geführt wird. Ein Anschlag 7 ist ein einem Ende der Führungsnut 4 gebildet. An dem Anschlag 7 ist ein rechtshändiges Koordinatensystem 8 abgebildet, um eine Beschreibung zu erleichtern. Wird der ID-Geber-Aufnahmeschlitten 6 entlang einer durch eine x-Achse 9 des Koordinatensystems 8 vorgegebene Richtung bis an den Anschlag 7 bewegt, so befindet sich der ID-Geber-Aufnahmeschlitten 6 in einer Grundstellung, die auch als Vorraststellung bezeichnet wird. In dieser Stellung können Rastschieber 11 in Aussparungen 12 von Seitenwänden 13 der weiteren unteren Gehäuseschale 5 ausweichen, um so einen ID-Geber, ähnlich zu einem ID-Geber 14 gemäß Fig. 3, aufzunehmen.

In Fig. 3 ist ein Abschnitt eines ID-Gebers 14 schematisch dargestellt. Der ID-Geber 14 gemäß Fig. 3. weist einen vorderen Teil 15, einen mittleren Teil 16 und einen hinteren Teil 17 auf. Der mittlere Teil 16 ist gegenüber dem vorderen Teil 15 und dem hinteren Teil 17 verjüngt. Der mittlere Teil 16 weist eine Kontur 18 auf, die komplementär zu Konturabschnitten ist, die in den Rastschiebern 11 ausgebildet sind. Wir der ID-Geber 16 in den in der Vorraststellung befindlichen ID-Geber-Aufnahmeschlitten 6 in negativer x-Richtung eingeführt, so werden die Rastschieber 11 entlang oder entgegen einer durch eine y-Achse 10 vorgegebenen Richtung in die Aussparungen 12 der Seitenwände 13 gedrängt. Passen die Konturabschnitte der Rastschieber 11 zu der Kontur 18 des ID-Gebers 14, so kehren die Rastschieber 11 in ihre Ausgangsstellung zurück. In dieser Ausgangsstellung der Rastschieber 11 ist der ID-Geber 14 in dem ID-Geber-Aufnahmeschlitten 6 verrastet, wenn der ID-Geber 14 eine Zugehörigkeit erster Art zu dem Zündschloss bzw. dem ID-Geber-Aufnahmeschlitten 6 aufweist. Wird der ID-Geber 14 weiter in negativer x-Richtung bewegt, so wird der ID-Geber-Aufnahmeschlitten 6 aus der Grundstellung in eine ausgelenkte Stellung bewegt. In der ausgelenkten Stellung werden die Rastschieber 11 durch die Seitenwände 13 daran gehindert, auseinander zu weichen und den ID-Geber 13 freizugeben.

An der nicht sichtbaren Unterseite des ID-Geber-Aufnahmeschlittens 6 ist ein Stift (nicht dargestellt) befestigt, der in die Führungskontur 3 im Boden 2 der unteren Gehäuseschale 2 eingreift und entlang der y-Richtung im ID-Geber-Aufnahmeschlitten 6 relativ zu diesem beweglich gelagert ist. Der Stift ist auf eine Mittelposition entlang der y-Richtung vorgespannt. Die Wechselwirkung des Stifts mit der Führungskontur 3 legt fest, welche Stellungen entlang der x-Richtung der ID-Geber-Aufnahmeschlitfen 6 in Abfolge einnehmen kann.

In Fig. 1 sind an der Führungskontur 3 die entsprechenden Stellungen eingezeichnet. Zunächst wird der so genannte S-Kontakt geschlossen. In dieser Stellung wird beispielsweise eine Lenksäulenverriegelung entriegelt. Wird der ID-Geber 14 tiefer in das Zündschloss in negativer x-Richtung bewegt, gelangt der ID-Geber-Aufnahmeschlitten 6 in die Stellung Klemme 15, d.h., die Klemme 15 wird geschlossen. Dieses bedeutet, dass eine Zündung des Kraftfahrzeugs aktiviert wird. Kurz bevor die Stellung Klemme 15 erreicht wird, wird die Sperrvorrichtung aktiviert, die weiter unten beschrieben wird. In der Stellung Klemme 15 wird der ID-Geber-Aufnahmeschlitten 6 mittels einer kleinen Blattfeder 19 in der Führungskontur 3 gehalten. Aus der Stellung Klemme 15 kann der ID-Geber-Aufnahmeschlitten 6 in die Stellung S-Kontakt zurückgezogen werden oder in die Stellung Klemme 50 bewegt werden, in der ein Antriebssystem des Kraftfahrzeugs aktiviert wird. Mittels einer Feder (nicht dargestellt) wird der ID-Geber-Aufnahmeschlitten 6 nach dem Loslassen des ID-Gebers 14 in die Stellung Klemme 15 Fahrt bewegt. Ein Zentralteil 20 der Führungskontur 3 verhindert im Zusammenwirken mit dem Stift, dass der ID-Geber-Aufnahmeschlitten 6 in eine andere Stellung bewegt werden kann.

Wird der ID-Geber erneut mit einem Kraftimpuls in negativer x-Richtung in das Zündschloss gedrückt, so verhindert eine Nase 21 im Zusammenwirken mit dem Stift, dass die Stellung Klemme 50 erneut erreicht wird. Stattdessen wird der ID-Geber 14 mit dem ID-Geber-Aufnahmeschlitten 6 mittels der Feder nach dem Loslassen des ID-Gebers 14 in die Stellung S-Kontakt zurückbewegt. Aus dieser Stellung kann der ID-Geber-Aufnahmeschlitten 6 nur mittels einer Zugkraft entlang der positiven x-Richtung an dem ID-Geber 14 in die Grundstellung zurückbewegt werden.

Diese Bewegung ist jedoch nur möglich, sofern die oben erwähnte Sperrvorrichtung nicht aktiv ist, das heißt, ein Sperrriegel der Sperrvorrichtung sich nicht in der sperrenden Stellung befindet.

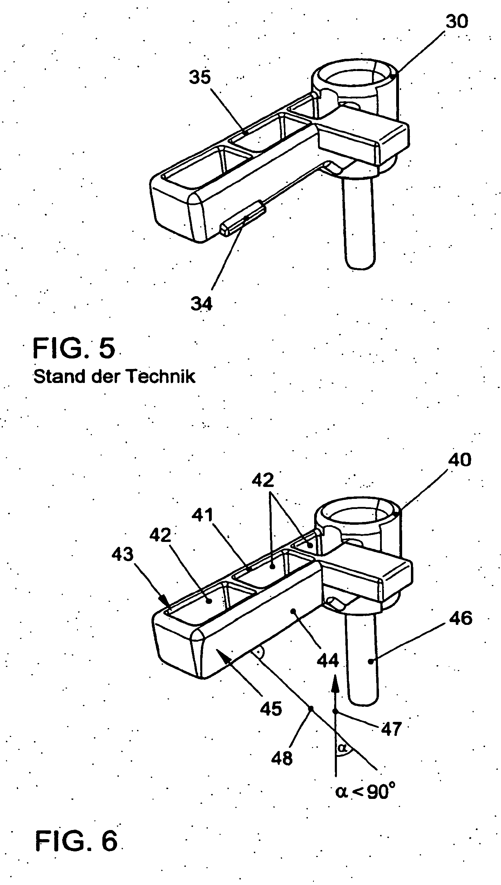

In Fig. 4 ist einen Ausschnitt der unteren Gehäuseschale 5 und des ID-Geber-Aufnahmeschlittens 6 nach Fig. 2 gemeinsam mit einem Sperrriegel 30 nach dem Stand der Technik in einer sperrenden Stellung dargestellt. Der ID-Geber-Aufnahmeschlitten 6 nach dem Stand der Technik umfasst einen Sperrnocken 31, der eine Kerbe 32 aufweist. Wird auf den ID-Geber-Aufnahmeschlitten 6 entlang der x-Richtung, die mittels eines Pfeils 33 angezeigt ist und eine Sperrrichtung darstellt, eine Kraft ausgeübt, so umgreift der Sperrnocken 31 einen Vorsprung 34, der an einem Sperrbalken 35 des Sperrriegels 30 nach dem Stand der Technik ausgebildet ist, der in Fig. 5 dargestellt ist.

Wird ein Aktor 36 der Sperrvorrichtung 37 betätigt, der vorzugsweise als magnetischer Aktor ausgebildet ist, um den Sperrriegel entlang einer z-Richtung (angedeutet durch einen weiteren Pfeil 38) in eine nicht sperrende Stellung zu bewegen, so verhindert das formschlüssige Hinterhaken des Sperrnockens 31 ein Entriegeln der Sperrvorrichtung 37.

Eine bevorzugte Ausführungsform der Sperrvorrichtung weist hingegen einen Sperrriegel 40 auf, wie er in Fig. 6 dargestellt ist. Ein Sperrbalken 41 weist eine quaderförmige Gestalt auf. Um eine leichte Bauform zu erhalten, sind Vertiefungen oder Durchbrüche 42 in einer Oberseite 43 vorgesehen. Eine Seitenfläche 44 ist als Wechselwirkungsfläche 45 ausgebildet. Die Wechselwirkungsfläche 45 ist eben und weist eine Neigung gegenüber einem Schaft 46 des Sperrriegels 40 auf, der eine Bewegungsrichtung 47 vorgibt, entlang derer der Sperrriegel aus der sperrenden in eine nicht sperrende Stellung bewegt wird. Eine Flächennormale 48 der Wechselwirkungsfläche 45 weist einen Winkel kleiner 90°, bevorzugt von 85° gegenüber der Bewegungsrichtung 47 auf.

Bei einer bevorzugten Ausführungsform eines Zündschlosses ist ein Sperrnocken an die Wechselwirkungsfläche 45 des Sperrriegels 40 so angepasst, dass eine Nockenoberfläche plan an der Wechselwirkungsfläche 45 anliegt. Ein Sperren der Entriegelung ist nicht mehr möglich. Vernachlässigt man Reibungseffekte, so ergibt es sich, dass eine Kraft in Sperrrichtung sogar eine Kraft in der Richtung auf den Sperrriegel überträgt, in der sich der Sperrriegel von der sperrenden in die nicht sperrende Stellung bewegt.

Um eine Selbsthemmung zu erhalten, d.h. zu erreichen, dass die in Sperrrichtung auf den ID-Geber wirkende Kraft, die auch als Abzugskraft bezeichnet wird, nicht selbst ein Entriegeln der Sperrvorrichtung bewirkt, ist der Wechselwirkungsfläche so zu gestalten, dass unter Berücksichtigung von Reibungseffekten keine Nettokraft in Entriegelungsrichtung der Sperrvorrichtung wirkt. Die Wechselwirkungsoberfläche wird so gestaltet, dass die unter Vernachlässigung von Reibungseffekten in Entriegelungsrichtung wirkende Kraft, die durch eine in Sperrrichtung wirkende Kraft auf den Sperrriegel übertragen wird, kleiner ist als Reibungskräfte, die überwunden werden müssen, um den Sperrriegel aus der sperrenden in die nicht sperrende Stellung zu bewegen.

Ein Winkel α, um den die Flächennormale der Wechselwirkungsfläche von 90° gegenüber der (anfänglichen) Entriegelungsrichtung abweichen kann, um die Selbsthemmungsbedingung zu erfüllen, kann mit Hilfe eines nachfolgend beschriebenen Verfahrens ermittelt werden.

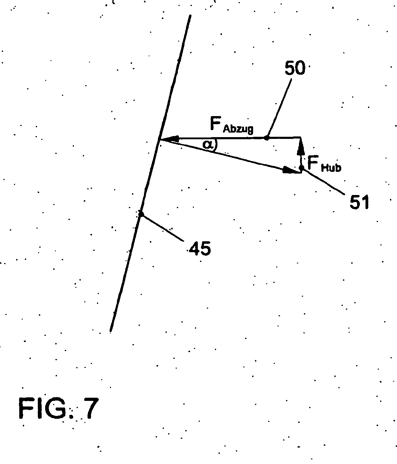

In Fig. 7 ist die Wechselwirkungsfläche 45 gemeinsam mit den beim Sperren wirkenden Kräften, einer Abzugskraft 50 in Sperrrichtung und eine Hubkraft 51 in Entriegelungsrichtung, dargestellt.

Ohne Reibung zwischen der Wechselwirkungsfläche 45 und der Nockenoberfläche gilt: F_{Hub}=F_{Abzug}·tan(α). Mit Reibung gilt: F_{Hub}=F_{Abzug}·tan(α-ρ). Um eine Selbsthemmung zu erhalten, muss gelten: F_{Hub} ≤ 0. Somit muss gelten α-ρ=0. ρ ist durch den Reibungskoeffizienten µ folgendermaßen festgelegt: ρ=arctan(µ). Für typische Kunststoffmaterialien, die im Kraftfahrzeugbau verwendet werden, gilt etwa µ=0,1. Hieraus folgt: ρ=5,7°. Somit sollte die Flächennormale der Wechselwirkungsfläche 45 maximal 5,7° von 90° gegenüber der Entriegelungsrichtung abweichen. Ein Winkel von 85° hat sich als optimal erwiesen, um eine sichere Entriegelung ohne Verspannung des ID-Geber-Aufnahmeschlittens 6 zu gewährleisten und zugleich eine zuverlässige Selbsthemmung zu erreichen. Ein geeigneter Wert für den Winkel α kann, ohne eine Berechnung auszuführen, auch einfach anhand von Versuchen empirisch ermittelt werden.

Bei den beschriebenen Ausführungsformen ist der Sperrnocken als vorspringendes Teil des ID-Geber-Aufnahmeschlittens ausgebildet. Die Wechselwirkungsfläche des Sperrriegels kann jedoch mit jeder beliebigen Oberfläche des ID-Geber-Aufnahmeschlittens bzw. des beweglichen Elements wechselwirken, die im Sinne des hier Ausgeführten als Sperrnocken bzw. Nockenoberfläche betrachtet wird.

Die Nockenoberfläche ist bevorzugt plan ausgeführt und so angeschrägt, dass sie beim Sperren plan an der Wechselwirkungsfläche des Sperrriegels anliegt.

### Bezugszeichenlisten

- 1: Gehäuseschale
- 2: Boden
- 3: Führungskontur
- 4: Führungsnut
- 5: weitere Gehäuseschale
- 6: ID-Geber-Aufnahmeschlitten
- 7: Anschlag
- 8: Koordinatensystem
- 9: x-Achse
- 10: y-Achse
- 11: Rastschieber
- 12: Aussparung
- 13: Seitenwände
- 14: ID-Geber
- 15: vorderes Teil des ID-Gebers
- 16: mittleres Teil des ID-Gebers
- 17: hinteres Teil des ID-Gebers
- 18: Kontur des ID-Gebers
- 19: Blattfeder
- 20: Zentralteil der Führungskontur
- 21: Nase
- 30: Sperrriegel
- 31: Sperrnocken
- 32: Kerbe
- 33: Pfeil, der die x-Richtung angibt
- 34: Vorsprung
- 35: Sperrbalken
- 36: Aktor
- 37: Sperrvorrichtung
- 38: weiterer Pfeil, der die z-Richtung angibt
- 40: Sperrriegel
- 41: Sperrbalken
- 42: Durchbrüche
- 43: Oberseite
- 44: Seitenfläche
- 45: Wechselwirkungsfläche
- 46: Schaft
- 47: Bewegungsrichtung
- 48: Flächennormale
- 50: Abzugskraft
- 51: Hubkraft

## Patentansprüche

1. Sperrvorrichtung für ein bewegliches Element, das zwischen einer Grundstellung und einer ausgelenkten Stellung bewegbar ist, umfassend
a. einen Sperrriegel (40), der
i. zwischen einer nicht sperrenden und einer sperrenden Stellung bewegbar ist
ii. und in der sperrenden Stellung des Sperrriegels (40) mit einem Sperrnocken des beweglichen Elements wechselwirkt, so dass eine Bewegung des beweglichen Elements von der ausgelenkten Stellung in die Grundstellung gesperrt ist,
wobei
b. der Sperrriegel (40) eine Wechselwirkungsfläche (45) umfasst, die in der sperrenden Stellung mit dem Sperrnocken wechselwirkt und so ausgebildet ist, dass eine eine Bewegung in die Grundstellung bewirkende Kraft auf das bewegliche Element beim Sperren unter Vernachlässigung einer Oberflächenreibung zwischen der Wechselwirkungsfläche und dem Sperrnocken eine Kraft auf den Sperrriegel bewirkt, die eine Bewegung in die nicht sperrende Stellung des Sperrriegels (40) unterstützt.
**dadurch gekennzeichnet,**
**dass** die Wechselwirkungsfläche (45) so ausgebildet ist, dass allein aufgrund der Oberflächenreibung mit dem Sperrnocken beim Sperren die eine Bewegung in die Grundstellung bewirkende Kraft auf das bewegliche Element beim Sperren keine resultierende Kraft auf den Sperrriegel (40) bewirkt, die eine Bewegung des Sperrriegels (40) aus der sperrenden Stellung in die nicht sperrende Stellung bewirkt.

2. Sperrvorrichtung nach Anspruch 1, **dadurch gekennzeichnet, dass** der Sperrriegel (40) ausgestaltet ist, eine lineare Hubbewegung zwischen der sperrenden Stellung und der nicht sperrenden Stellung auszuführen.

3. Sperrvorrichtung nach Anspruch 1 oder 2, **dadurch gekennzeichnet, dass** der Sperrriegel (40) einen Sperrbalken (41) umfasst, wobei die Wechselwirkungsfläche (45) eine ebene Seitenfläche (44) des Sperrbalkens (41) ist, deren Flächennormale einen Winkel kleiner 90° bezüglich einer Bewegungsrichtung (47) bildet, der der Sperrriegel (40) zumindest anfänglich bei einer Bewegung aus der sperrenden Stellung in die nicht sperrende Stellung folgt.

4. Sperrvorrichtung nach einem der Ansprüche 1 bis 3, **dadurch gekennzeichnet, dass** die Flächennormale (48) der Wechselwirkungsfläche (45) bezüglich der Bewegungsrichtung (47), der der Sperrriegel zumindest anfänglich bei einer Bewegung aus der sperrenden Stellung in die nicht sperrende Stellung folgt, einen Winkel von größer 84°, vorzugsweise einen Winkel von 85° bildet.

5. Sperrvorrichtung nach einem der vorangehenden Ansprüche, **dadurch gekennzeichnet, dass** das bewegliche Element ein ID-Geber-Aufnahmeelement ist, das in der Grundstellung einen ID-Geber (14) aufnehmen kann und bei einer Zugehörigkeit erster Art des ID-Gebers (14) zu dem ID-Geber-Aufnahmeelement mit dem aufgenommenen ID-Geber (14) in die ausgelenkte Stellung bewegbar ist, wobei das ID-Geber-Aufnahmeelement den ID-Geber in der ausgelenkten Stellung nicht freigibt.

6. Zündschloss mit einem ID-Geber-Aufnahmeelement, das in der Grundstellung einen ID-Geber (14) aufnehmen kann und bei einer Zugehörigkeit erster Art des ID-Gebers (14) zu dem ID-Geber-Aufnahmeelement mit dem aufgenommenen ID-Geber (14) in die ausgelenkte Stellung bewegbar ist, wobei das ID-Geber-Aufnahmeelement den ID-Geber in der ausgelenkten Stellung nicht freigibt,
**gekennzeichnet durch** eine Sperrvorrichtung nach einem der Ansprüche 1 bis 5, wobei das ID-Geber-Aufnahmeelement das bewegliche Element darstellt.

7. Zündschloss nach Anspruch 6, **dadurch gekennzeichnet, dass** der Sperrnocken des ID-Geber-Aufnahmeelements eine ebene Nockenoberfläche aufweist, die beim Sperren plan an der Wechselwirkungsfläche (45) des Sperrriegels (40) anliegt.

8. Zündschloss nach einem der Ansprüche 6 oder 7, **dadurch gekennzeichnet, dass** das ID-Geber-Aufnahmeelement in der ausgelenkten Stellung in unterschiedliche Schaltpositionen bewegbar ist und bei Vorliegen einer Zugehörigkeit zweiter Art an den Schaltpositionen Schaltkontakte öffen- und/oder schließbar sind.

9. Zündschloss nach einem der Ansprüche 6 bis 8, **gekennzeichnet durch** eine Erfassungseinheit zum Erfassen einer Kennung des ID-Gebers und eine elektronische Verarbeitungseinheit, mit der die Kennung zur Überprüfung der Zugehörigkeit zweiter Art auswertbar ist.

## Claims

1. Locking device for a movable element which can be moved between a basic position and a deflected position, comprising:
a. a locking bolt (40) which
i. can be moved between a non-locking and a locking position,
ii. and interacts, in the locking position of the locking bolt (40), with a locking cam of the movable element so that a movement of the movable element from the deflected position into the basic position is locked,
wherein
b. the locking bolt (40) comprises an interaction face (45) which interacts, in the locking position, with the locking cam and is embodied in such a way that a force which brings about a movement into the basic position and acts on the movable element during the locking process brings about, discounting surface friction between the interaction face and the locking cam, a force on the locking bolt which assists movement into the non-locking position of the locking bolt (40),
**characterized**
**in that** the interaction face (45) is embodied in such a way that it is solely by virtue of the surface friction with the locking cam during the locking process that the force which brings about a movement into the basic position and which acts on the movable element during the locking process does not bring about any resulting force which acts on the locking bolt (40) and brings about a movement of the locking bolt (40) out of the locking position into the non-locking position.

2. Locking device according to Claim 1, **characterized in that** the locking bolt (40) is configured to carry out a linear reciprocating movement between the locking position and the non-locking position.

3. Locking device according to Claim 1 or 2, **characterized in that** the locking bolt (40) comprises a locking bar (41), wherein the interaction face (45) is a planar side surface (44) of the locking bar (41), the surface normal of which forms an angle of less than 90° with respect to a direction of movement (47) which the locking bolt (40) follows at least initially during a movement out of the locking position into the non-locking position.

4. Locking device according to one of Claims 1 to 3, **characterized in that** the surface normal (48) of the interaction face (45) forms, with respect to the direction of movement (47) which the locking bolt follows at least initially during a movement out of the locking position into the non-locking position, an angle of more than 84°, preferably an angle of 85°.

5. Locking device according to one of the preceding claims, **characterized in that** the movable element is an ID signal transmitter accommodating element which can accommodate an ID signal transmitter (14) in the basic position and, if there is a first type of association of the ID signal transmitter (14) to the ID signal transmitter accommodating element, said movable element can be moved into the deflected position with the accommodated ID signal transmitter (14), wherein the ID signal transmitter accommodating element does not release the ID signal transmitter in the deflected position.

6. Ignition lock having an ID signal transmitter accommodating element which can accommodate an ID signal transmitter (14) in the basic position and, if there is a first type of association of the ID signal transmitter (14) to the ID signal transmitter accommodating element, said accommodating element can be moved into the deflected position with the accommodated ID signal transmitter (14), wherein the ID signal transmitter accommodating element does not release the ID signal transmitter in the deflected position,
**characterized by** a locking device according to one of Claims 1 to 5, wherein the ID signal transmitter accommodating element constitutes the movable element.

7. Ignition lock according to Claim 6, **characterized in that** the locking cam of the ID signal transmitter accommodating element has a planar cam surface which rests flat against the interaction face (45) of the locking bolt (40) during the locking process.

8. Ignition lock according to either of Claims 6 and 7, **characterized in that** the ID signal transmitter accommodating element can be moved, in the deflected position, into different switched positions and, if there is a second type of association, switching contacts at the switched positions can be opened and/or closed.

9. Ignition lock according to one of Claims 6 to 8, **characterized by** a detection unit for detecting an identifier of the ID signal transmitter, and an electronic processing unit with which the identifier can be evaluated in order to check the association of the second type.

## Revendications

1. Dispositif de blocage d'un élément mobile apte à être déplacé entre une position de base et une position déployée, le dispositif comportant :
a. un verrou de blocage (40)
i. qui peut être déplacé entre une position non bloquante et une position bloquante et
ii. qui, lorsque le verrou de blocage (40) est en position bloquante, coopère avec une came de blocage de l'élément mobile de manière à bloquer un déplacement de l'élément mobile depuis sa position déployée jusque dans sa position de base,
b. le verrou de blocage (40) comprenant une surface d'interaction (45) qui coopère avec la came de blocage lorsqu'il est dans la position bloquante et qui est configurée de telle sorte qu'une force agissant sur l'élément mobile avec pour effet un déplacement jusque dans sa position de base exerce sur le verrou de blocage une force qui soutient son déplacement jusque dans la position non bloquante du verrou de blocage (40), sans tenir compte du frottement de surface entre la surface d'interaction et la came de blocage,
**caractérisé en ce que**
la surface d'interaction (45) est configurée de telle sorte qu'uniquement sur la base du frottement de surface avec la came de blocage lors du blocage, la force qui est exercée sur l'élément de blocage lors du blocage et qui a pour effet un déplacement jusque dans la position de base n'exerce pas sur le verrou de blocage (40) une force résultante qui a pour effet un déplacement du verrou de blocage (40) depuis la position bloquante jusque dans la position non bloquante.

2. Dispositif de blocage selon la revendication 1, **caractérisé en ce que** le verrou de blocage (40) est configuré de manière à exécuter un déplacement linéaire de relèvement entre la position bloquante et la position non bloquante.

3. Dispositif de blocage selon les revendications 1 ou 2, **caractérisé en ce que** le verrou de blocage (40) comporte une tige de blocage (41), la surface d'interaction (45) étant une surface latérale plane (44) de la tige de blocage (41) dont la normale forme un angle inférieur à 90° par rapport à la direction de déplacement (47) suivie au moins initialement par le verrou de blocage (40) lors d'un déplacement depuis sa position bloquante jusque dans sa position non bloquante.

4. Dispositif de blocage selon l'une des revendications 1 à 3, **caractérisé en ce que** la normale (48) à la surface d'interaction (45) forme un angle supérieur à 84° et de préférence un angle de 85° par rapport à la direction de déplacement (47) suivie au moins initialement par le verrou de blocage lors d'un déplacement depuis sa position bloquante jusque dans sa position non bloquante.

5. Dispositif de blocage selon l'une des revendications précédentes, **caractérisé en ce que** l'élément mobile est un élément de reprise d'un transmetteur d'ID qui peut reprendre un transmetteur d'ID (14) dans sa position de base et **en ce que** lorsque le transmetteur d'ID (14) repris par l'élément de reprise de transmetteur ID est d'un premier type, il peut être déplacé dans la position déployée avec le transmetteur d'ID (14) qui y est repris, l'élément de reprise de transmetteur d'ID ne libérant pas le transmetteur d'ID lorsqu'il est dans sa position déployée.

6. Serrure de démarrage dotée d'un élément de reprise de transmetteur d'ID qui, dans sa position de base, peut reprendre un transmetteur d'ID (14) et qui peut être déplacé dans la position déployée avec le transmetteur d'ID (14) qui y est repris lorsque le transmetteur d'ID (14) repris par l'élément de reprise de transmetteur d'ID est d'un premier type, l'élément de reprise du transmetteur d'ID ne libérant pas le transmetteur d'ID lorsqu'il est dans sa position déployée,
**caractérisée par**
un dispositif de blocage selon l'une des revendications 1 à 5, l'élément de reprise du transmetteur d'ID constituant l'élément mobile.

7. Serrure de démarrage selon la revendication 6, **caractérisée en ce que** la came de blocage de l'élément de reprise du transmetteur d'ID présente une surface de came plane qui, lors du blocage, repose à plat sur la surface d'interaction (45) du verrou de blocage (40).

8. Serrure de démarrage selon l'une des revendications 6 ou 7, **caractérisée en ce que** l'élément de reprise du transmetteur d'ID peut être déplacé dans la position déployée en différentes positions de commutation et **en ce que** des contacts de commutation peuvent être ouverts et/ou fermés dans les positions de commutation au cas où le transmetteur d'ID est d'un deuxième type.

9. Serrure de démarrage selon l'une des revendications 6 à 8, **caractérisée par** une unité de saisie qui saisit une caractéristique du transmetteur d'ID et par une unité électronique de traitement par laquelle la caractéristique peut être évaluée pour vérifier si le transmetteur d'ID appartient au deuxième type.
